# EUROPÄISCHE PATENTSCHRIFT

(11) **EP 2 847 045 B1**
(45) Veröffentlichungstag und Bekanntmachung des Hinweises auf die Patenterteilung: **29.06.2016**
(21) Anmeldenummer: 13720381.6
(22) Anmeldetag: 02.05.2013
(51) Int. Cl.: B60R 21/13

(54) **KRAFTFAHRZEUG MIT EINEM ÜBERROLLSCHUTZSYSTEM**
MOTOR VEHICLE WITH A ROLL OVER PROTECTION SYSTEM
VEHICULE AUTOMOBILE AVEC SYSTEME DE PROTECTION EN CAS DE RENVERSEMENT

(30) Priorität: 10.05.2012 DE 102012207820
(43) Veröffentlichungstag der Anmeldung: 18.03.2015
(73) Patentinhaber: Bayerische Motoren Werke Aktiengesellschaft, 80809 München (DE)
(72) Erfinder: SCHIPPAN, Juergen, 85617 Assling (DE); HOLLER, Peter, 86899 Landsberg (DE); TREPTOW, Joerg, 85305 Jetzendorf (DE)
(86) Internationale Anmeldenummer: PCT/EP2013/059144
(87) Internationale Veröffentlichungsnummer: WO 2013/167460

(56) Entgegenhaltungen:
- EP-A1- 1 547 874
- EP-A1- 1 902 909
- EP-A2- 1 028 050
- DE-U1- 20 103 001
- FR-A1- 2 924 998

## Beschreibung

Die Erfindung betrifft ein Kraftfahrzeug mit einem Überrollschutzsystem gemäß dem Oberbegriff des Anspruchs 1.

Ein Kraftfahrzeug, welches dem Oberbegriff des Anspruchs 1 entspricht ist beispielsweise aus EP 1 547 874 A1 oder der EP 1 902 909 A1 bekannt.

Ein weiteres Kraftfahrzeug ist aus der DE 10 2006 015 756 A1 bekannt und weist einen bügelförmigen Überrollstützkörper auf, der in seitlichen Aufnahmen an die Karosserie angebunden ist. Bei einer ersten Variante des bekannten Kraftfahrzeugs, die beispielsweise in Fig. 4 der DE 10 2006 015 756 A1 dargestellt ist, werden Halterungen für den Überrollstützkörper (Führungsschienen 6) in eine fahrzeugfeste Aufnahme (Halterung 7a) eingeschraubt. Diese Aufnahmen sind mit der Karosserie des Kraftfahrzeugs verschweißt. Die Schrauben durchsetzen die Aufnahmen und die Halterungen in X-Richtung des Kraftfahrzeugs.

Nachteilig bei dem bekannten Kraftfahrzeug ist, dass die Aufnahmen so ausgelegt sind, dass sie die Halterungen in X-Richtung im Wesentlichen formschlüssig aufnehmen. Demzufolge weisen die Aufnahmen in X-Richtung des Kraftfahrzeugs eine vergleichsweise geringe Erstreckung auf, so dass sich die Aufnahmen mit einer nur sehr schmalen Basis an der Karosserie des Kraftfahrzeugs abstützen können. Daher müssen die Aufnahmen mit einer relativ großen Materialstärke ausgeführt sein. In gleicher Weise sind auch die Karosserieabschnitte, auf denen die Aufnahmen durch Verschweißung befestigt sind, entsprechend steif auszuführen. Außerdem ergibt sich durch die Verschraubung in X-Richtung zwangsläufig ein Hebelarm für in den Überrollstützkörper eingeleitete Kräfte. Dieser Hebelarm resultiert aus dem Abstand der Schraubenköpfe von dem Karosserieabschnitt, auf dem die Aufnahme befestigt ist.

Aufgabe der Erfindung ist es, eine verbesserte Anbindung zwischen dem Überrollschutzsystem und der Karosseriestruktur des Kraftfahrzeugs bereitzustellen.

Diese Aufgabe wird durch ein Kraftfahrzeug mit den Merkmalen des Anspruchs 1 gelöst.

Kerngedanke ist es hierbei zum einen, die Aufnahme deutlich breiter auszuführen als die Halterung. Hierdurch wird eine breite Abstützbasis für die Aufnahme geschaffen, so dass die bei einem Überschlag am Überrollstützkörper auftretenden Kräfte in vorteilhafter Weise in die Aufnahme und damit in die Karosserie eingeleitet werden können. Somit ist es möglich, die Blechstärke an dem Karosserieabschnitt, auf den die Aufnahme aufgesetzt ist, vergleichsweise gering auszuführen. Kemgedanke ist des Weiteren, die Halterung mit Schrauben an der Aufnahme zu befestigen, die "seitlich" (das heißt in X-Richtung versetzt) des Überrollstützkörpers angeordnet sind. Die Längsachsen der Schrauben zur Befestigung der Halterung an der Aufnahme verlaufen dabei zumindest annähernd in Y-Richtung des Kraftfahrzeugs. Durch diese Anbindung wird ein möglichst kleiner Hebelarm zwischen der Auflagefläche des Schraubenkopfes an der Aufnahme und der Karosserie des Kraftfahrzeugs erreicht, mit Vorteilen bei der Einleitung von Kräften, die im Fall eines Überschlags des Kraftfahrzeugs in X-Richtung des Kraftfahrzeugs auf den Überrollstützkörper einwirken. Weiter erfindungsgemäß weist die Aufnahme einen in Z-Richtung des Kraftfahrzeugs verlaufenden Abschnitt auf, durch den eine Aussteifung der Aufnahme erfolgt, indem ein holmartiger Abschnitt mit einem innenliegenden Hohlraum gebildet wird, um einen besonders steifen Bereich für eine stabile Anbindung der Halterung zu schaffen. Die Aufnahme ist auf eine Karosseriestruktur an der Innenseite eines hinteren Radhauses und/oder eines Seitenwandbereichs des Kraftfahrzeugs aufgesetzt. Die Verbindung erfolgt beispielsweise durch Punktverschweißung.

Gemäß der Erfindung ist der holmartige Abschnitt einerseits durch die Aufnahme und andererseits durch ein weiteres, als Schließprofil ausgestaltetes Bauteil gebildet. Hierbei ist bevorzugt die Aufnahme mit einer Profilierung in Form einer Ausbauchung versehen, durch die ein geschlossenes Hohlprofil mit großer Biegesteifigkeit gebildet wird, das eine besonders steife Struktur für die Anbindung der Halterung bildet. Alternativ oder zusätzlich kann das weitere als Schließprofil ausgebildete Bauteil eine Profilierung in Form einer Ausbauchung zur Bildung des holmartigen Abschnitts aufweisen.

Gemäß der Erfindung ist an der Rückseite der Aufnahme wenigstens ein Stützkörper vorgesehen, der die Oberseite des Radhauses mit der Rückseite der Aufnahme verbindet. Durch den Stützkörper und die Aufnahme wird oberhalb des Radhauses eine stabile Struktur für die Anbindung der Halterung geschaffen, durch die sich ein kleiner Hebelarm für die im Fall eines Fahrzeugüberschlags am Überrollschutzsystem angreifenden Kräfte ergibt.

In Ausgestaltung der Erfindung sind an der Aufnahme Innengewinde für den Eingriff der Schrauben vorgesehen. Somit können die Schrauben für die Befestigung der Halterung ohne weiteres in die Aufnahme eingesetzt werden. Insbesondere ist keine Zugänglichkeit an der Rückseite der Aufnahme erforderlich. Wegen der begrenzten Materialdicke der Aufnahme sind die Innengewinde für die Schrauben bevorzugt nicht in der Aufnahme selbst ausgebildet, sondern als separate Muttern, beispielsweise als Schweißmuttern.

In weiterer Ausgestaltung der Erfindung ist wenigstens eine Verstärkung und/oder ein Stützwinkel oder dergleichen vorgesehen. Hierdurch kann die Aufnahme fahrzeuginnenseitig und/oder fahrzeugaußenseitig verstärkt und/oder gegenüber der umgebenden Karosseriestruktur abgestützt werden. Auf diese Weise ergibt sich eine zusätzliche Versteifung der Anbindung des Überrollschutzsystems an die Karosserie des Kraftfahrzeugs.

Die Erfindung wirkt sich im Rohbau eines Kraftfahrzeugs vorteilhaft aus, wenn an der Außenseite des Radhauses, im Bereich gegenüberliegend der Aufnahme für die Halterung des Überrollstützkörpers, eine Konsole für eine Komponente der Hinterachse des Kraftfahrzeugs angeordnet ist. Hierbei wird in einem ersten Schritt die Achskonsole mit der Außenseite des Radhauses beispielsweise durch Punktschweißung verbunden. Durch die breitbasige Ausgestaltung der Aufnahme kann diese anschließend in einem zweiten Schritt mit der Innenseite des Radhauses punktverschweißt werden, ohne dass die Achskonsole den Punktschweißzangen im Weg steht.

In bevorzugter Ausgestaltung der Erfindung weist die Halterung einen geschlossenen Querschnitt auf und nimmt innerhalb dieses Querschnittes den Überrollstützkörper auf. Zu beiden Seiten der Halterung, also in Fahrtrichtung des Kraftfahrzeugs betrachtet vor und hinter dem Überrollstützkörper, ist jeweils mindestens ein Befestigungsabschnitt für den Durchtritt wenigstens einer Schraube vorgesehen. Die Befestigungsabschnitte stehen vom geschlossenen Querschnitt ab und erstrecken sich in der Einbaulage der Halterung im Kraftfahrzeug etwa in einer XZ-Ebene des Kraftfahrzeugs. Damit verlaufen die Befestigungsabschnitte etwa parallel zur Fläche der Aufnahme, an der die Halterung befestigt ist.

In vorteilhafter Ausgestaltung der Erfindung ist die Halterung über ihre Befestigungsabschnitte zu beiden Seiten der Halterung mit mindestens jeweils zwei Schrauben an der Aufnahme befestigt. Die Schrauben sind zu beiden Seiten der Halterung jeweils möglichst weit außenliegend und/oder mit möglichst großem Abstand zueinander anzuordnen, so dass sich eine möglichst große Abstützbasis ergibt. In bevorzugter Ausgestaltung der Erfindung ist die Halterung beidseitig mit jeweils zwei Schrauben an der Aufnahme befestigt. Durch diese Befestigung mit vier Schrauben ergibt sich eine gewichtsoptimierte Verbindung mit breiter Abstützbasis.

Die Halterung ist beispielsweise als Strangprofil ausgebildet. Alternativ kann die Halterung zum Beispiel auch aus zwei zusammengesetzten Halbschalen bestehen. Die Halterung besteht, insbesondere in der Ausführung als Strangprofil, vorzugsweise aus einem Leichtmetallwerkstoff. Selbstverständlich kann die Halterung jedoch auch aus einem anderen geeigneten Material gefertigt sein.

Die Aufnahme ist bevorzugt als Tiefziehteil aus einem Stahlwerkstoff hergestellt, so dass in einfacher Weise eine Schweißverbindung mit einer aus einem Stahlwerkstoff gefertigten Karosseriestruktur hergestellt werden kann. Selbstverständlich kann die Aufnahme jedoch auch aus einem anderen geeigneten Material gefertigt sein, beispielsweise aus einem Leichtmetallwerkstoff, zum Beispiel aus einer Aluminiumlegierung. Die Ausführung in einem Leichtmetallwerkstoff ist vor allem dann vorteilhaft, wenn auch die Karosseriestruktur aus einem Leichtmetallwerkstoff gefertigt ist, um auch für diesen Fall in einfacher Weise eine Schweißverbindung herstellen zu können. Alternativ kann die Aufnahme beispielsweise aus einem faserverstärkten Kunststoffmaterial bestehen, zum Beispiel aus CFK.

Der Überrollstützkörper kann in der Halterung in Z-Richtung verlagerbar aufgenommen sein, so dass der Überrollstützkörper bei einem Fahrzeugüberschlag aus einer abgesenkten Nichtgebrauchslage in eine nach oben verlagerte Stützposition ausgefahren werden kann. Selbstverständlich kann das Überrollschutzsystem auch als passives System mit ortsfesten Überrollstützkörpern ausgebildet sein.

Bevorzugt weist die Halterung einen etwa rechteckförmigen Querschnitt auf, so dass die fahrzeugaußenseitige Wandung der Halterung ebenflächig an der Aufnahme anliegt. Bei einer im Querschnitt rechteckförmigen Halterung ist auch der Überrollstützkörper bevorzugt rechteckförmig, so dass sich zusätzlich zu einer vorteilhaften Raumausnutzung auch eine Verdrehsicherung des Überrollstützkörpers in der Halterung ergibt. Selbstverständlich kann die Halterung jedoch auch einen anderen geeigneten Querschnitt aufweisen, beispielsweise kreisrund, oval, elliptisch etc. Alternativ kann die Halterung auch einen von diesen geometrischen Grundformen abweichenden Querschnitt aufweisen.

In Ausgestaltung der Erfindung ist an beiden Seitenbereichen des Kraftfahrzeugs jeweils eine Halterung für jeweils einen "unabhängigen" Überrollstützkörper vorgesehen. Damit wird die Montage des Überrollschutzsystems bei Lageabweichungen zwischen dem rechten und dem linken Überrollstützkörper erleichtert. Selbstverständlich kann das Überrollschutzsystem alternativ auch einen einzigen, über die Fahrzeugbreite reichenden Überrollstützkörper aufweisen, dessen Schenkel in den beiden fahrzeugaußenseitigen Halterungen aufgenommen sind.

Zur Erhöhung der Steifigkeit des Überrollschutzsystems und damit des gesamten Heckbereichs des erfindungsgemäßen Kraftfahrzeugs kann eine sich in Querrichtung des Kraftfahrzeugs erstreckende Strebe vorgesehen sein, die die beiden karosseriefesten Halterungen miteinander verbindet. Ein Ausgleich von Toleranzen in Querrichtung des Kraftfahrzeugs kann in einfacher Weise erfolgen, zum Beispiel mittels einer Schraubverbindung mit Langlöchern.

Bei dem erfindungsgemäßen Kraftfahrzeug handelt es sich um ein Kraftfahrzeug mit einem öffnungsfähigen Dach, beispielsweise um ein Cabrio oder einen Roadster. Selbstverständlich kann das Kraftfahrzeug auch ein oben offenes Fahrzeug ohne Dach sein. Das Kraftfahrzeug kann als zweisitziges Fahrzeug ausgebildet sein oder zusätzlich zu den Vordersitzen auch Rücksitze aufweisen.

Die vorliegende Erfindung ist - abweichend vom Wortlaut der Patentansprüche - in analoger Weise auch dann realisiert, wenn der wenigstens eine Überrollstützkörper ohne Zwischenschaltung einer separaten Halterung mit der Aufnahme verbunden ist. Dies ist insbesondere bei einem Überrollschutzsystem mit einem nicht verlagerbaren Überrollstützkörper relevant. In diesem Fall ist der Überrollstützkörper unmittelbar mit wenigstens einem Befestigungsabschnitt versehen, der mit der Aufnahme verschraubt ist.

Die im Zusammenhang mit der vorliegenden Erfindung verwendeten Koordinaten X, Y und Z sind wie folgt definiert: Die X-Richtung entspricht der Fahrtrichtung bei Geradeausfahrt des Kraftfahrzeugs. Die Y-Richtung ist als Querrichtung des Kraftfahrzeugs definiert, verläuft also senkrecht zur Fahrtrichtung in einer horizontalen Ebene. Die Z-Richtung entspricht der Hochachse des Kraftfahrzeugs, verläuft also senkrecht zur Fahrtrichtung in einer vertikalen Ebene.

Alle im Zusammenhang mit der vorliegenden Erfindung verwendeten Lageangaben beziehen sich auf die Einbaulage des Überrollschutzsystems und seiner Komponenten im Kraftfahrzeug.

Ein mögliches Ausführungsbeispiel der Erfindung ist in der Zeichnung dargestellt und wird nachfolgend näher erläutert. Es zeigt:
- Fig. 1: eine perspektivische Ansicht auf den Heckbereich des Rohbaus eines Kraftfahrzeugs mit einem Überrollschutzsystem, mit Blickrichtung von der Fahrzeugmitte aus nach schräg hinten auf die linke Fahrzeugseite,
- Fig. 2: eine der Fig. 1 entsprechende Darstellung, mit Blickrichtung nach schräg vorne auf die linke Fahrzeugseite,
- Fig. 3: eine der Fig. 1 entsprechende Darstellung, mit Blickrichtung in Y-Richtung des Kraftfahrzeugs auf die linke Fahrzeugseite,
- Fig. 4: einen Schnitt entsprechend der Schnittverlaufslinie IV-IV in Fig. 3,
- Fig. 5: einen Schnitt entsprechend der Schnittverlaufslinie V-V in Fig. 3 und
- Fig. 6: einen Schnitt entsprechend der Schnittverlaufslinie VI-VI in Fig. 3.

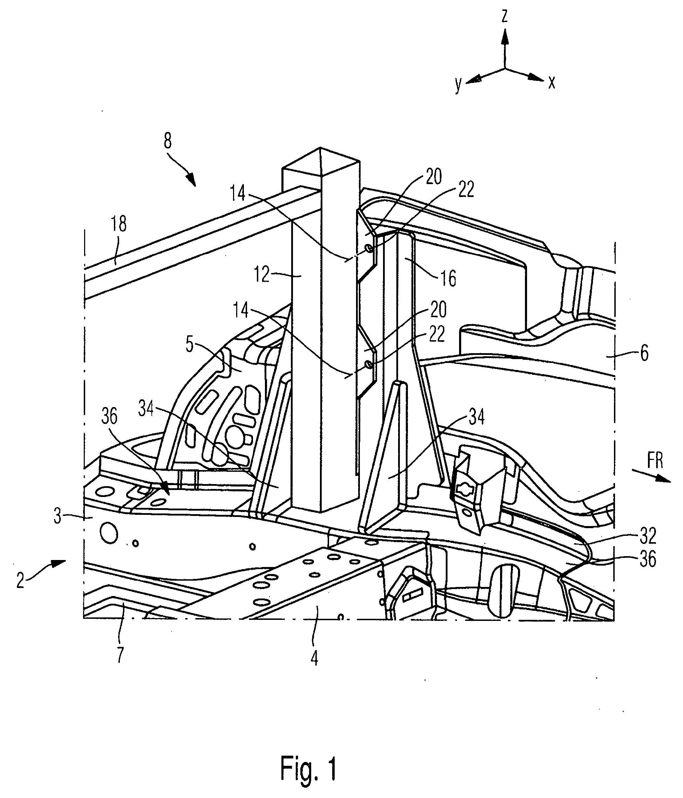

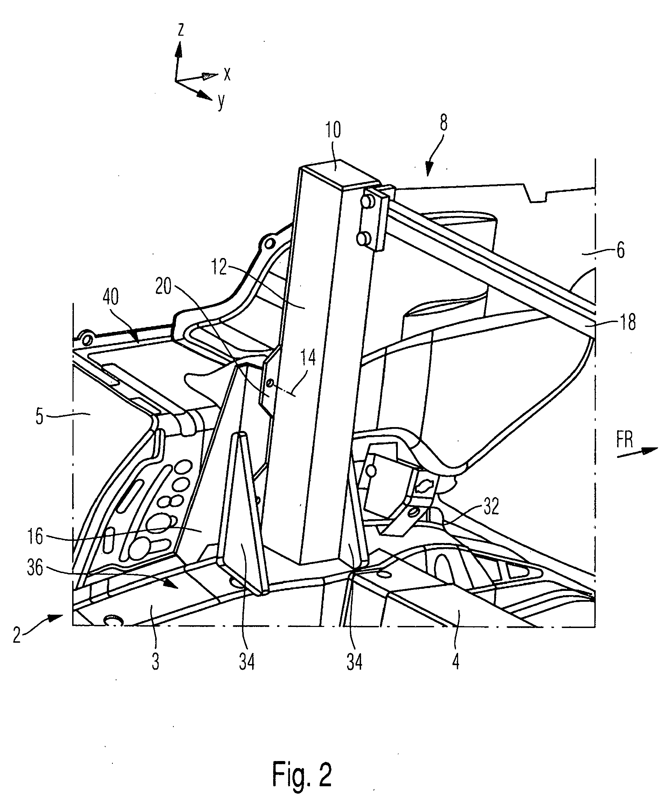

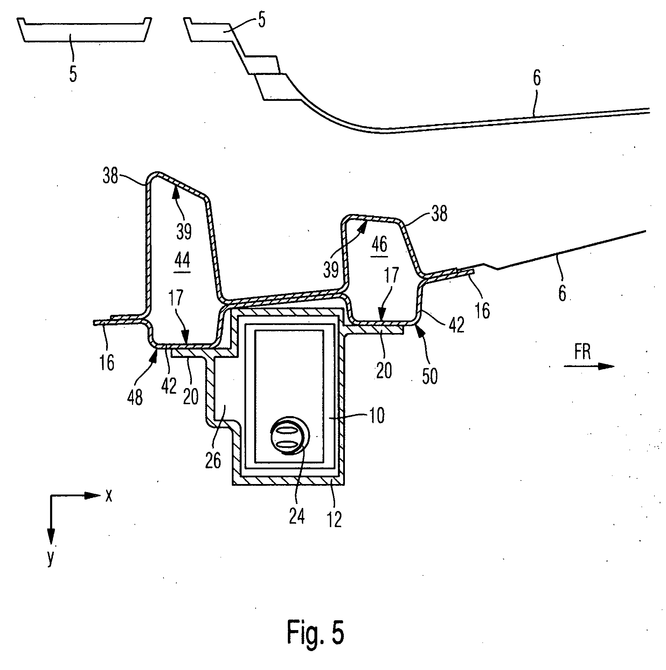

Von einem in seiner Gesamtheit mit 2 bezeichneten Kraftfahrzeug mit einem öffnungsfähigen Dach ist in den Fig. 1 bis 3 lediglich ein Ausschnitt des Heckbereichs der linken Fahrzeugseite dargestellt. Die rechte Hälfte des Kraftfahrzeugs 2 ist spiegelbildlich aufgebaut. Die Fahrtrichtung ist mit FR bezeichnet. Die Raumrichtungen X, Y und Z gehen aus den Koordinatensystemen der Fig. 1 bis 6 hervor.

An einen hinteren Längsträger 3 des Kraftfahrzeugs 2 schließt sich fahrzeugaußenseitig im Bereich eines Sitzquerträgers 4 eine Karosseriestruktur mit einem hinteren Radhaus 5 und einem Seitenwandbereich 6 an. An den Sitzquerträger 4 grenzt heckseitig ein Gepäckraumboden 7 an. Im Bereich des Radhauses 5 und des Seitenwandbereichs 6 ist ein in seiner Gesamtheit mit 8 bezeichnetes Überrollschutzsystem vorgesehen.

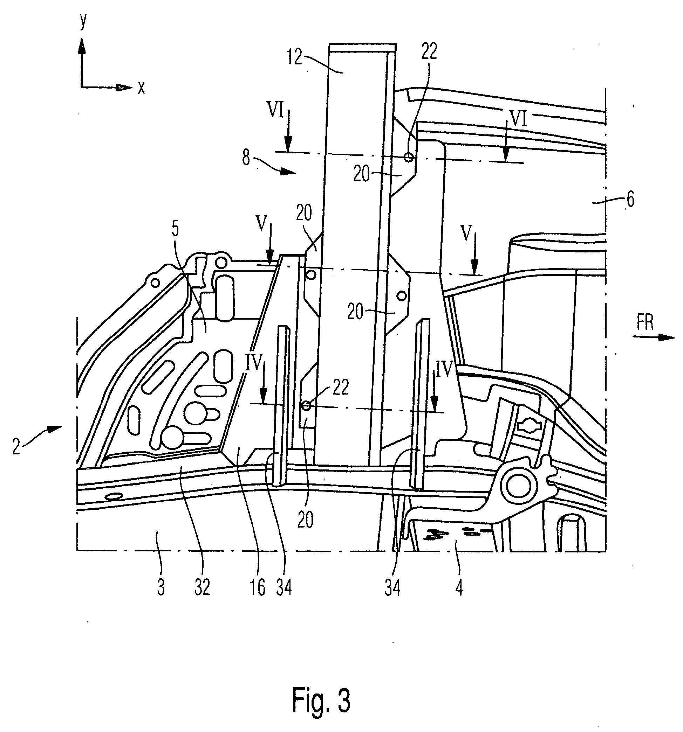

Das Überrollschutzsystem 8 weist im Wesentlichen einen rechten und einen linken Überrollschutzkörper 10 auf, wobei in der Zeichnung lediglich der linke Überrollstützkörper 10 zu sehen ist. Die Überrollstützkörper 10 sind in Z-Richtung des Kraftfahrzeugs 2 verschieblich in Halterungen 12 aufgenommen (in Fig. 1 und 3 nicht dargestellt). Die Halterungen 12 sind über stilisiert dargestellte Schrauben 14 an Aufnahmen 16 des Kraftfahrzeugs 2 befestigt. Die beiden Halterungen 12 sind über eine Querstrebe 18, die in Y-Richtung des Kraftfahrzeugs 2 verläuft, miteinander verbunden (in Fig. 3 nicht dargestellt).

Die Halterungen 12 sind als Hohlprofil mit einem geschlossenen Querschnitt ausgebildet und werden beispielsweise von Strangprofilen gebildet. Von dem näherungsweise rechteckförmigen Querschnitt der Halterungen 12 stehen außenseitig Befestigungsabschnitte 20 ab, die etwa in einer XZ-Ebene des Kraftfahrzeugs 2 verlaufen. Die Befestigungsabschnitte 20 weisen Durchgangsbohrungen 22 für die Durchführung der Schrauben 14 auf.

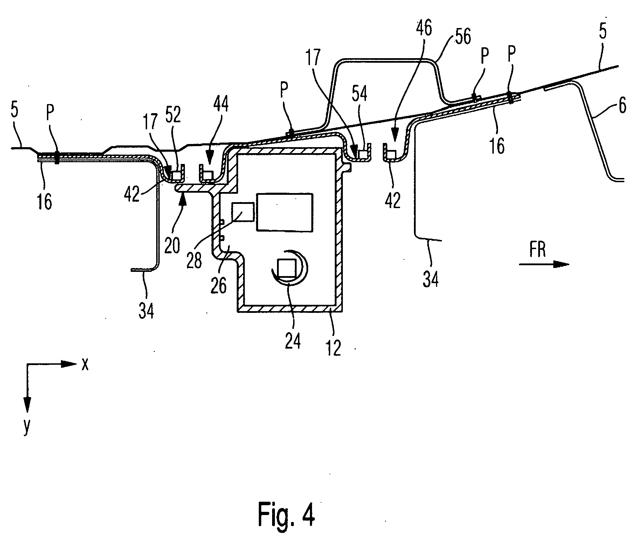

Die Überrollstützkörper 10 sind im Querschnitt ebenfalls etwa rechteckförmig ausgebildet und werden im Inneren der Halterungen 12 geführt. Wie aus den Fig. 4 bis 6 hervorgeht, sind im Inneren der Überrollstützkörper 10 Federanordnungen 24 für die Ausfahrbewegung der Überrollstützkörper 10 vorgesehen. Außerdem sind in seitlichen Taschen 26 der Halterungen 12 Rasteinrichtungen 28 für die Arretierung der im Gefahrenfall in ihre Stützposition nach oben verlagerten Überrollstützkörper 10 angeordnet.

Die Aufnahmen 16 sind oberhalb des hinteren Längsträgers 3 mit der Innenseite des Radhauses 5 verschweißt. Die Aufnahmen 16 erstrecken sich über nahezu die gesamte Höhe der Halterungen 12. Sie beginnen oberhalb von Schweißflanschen 32 der hinteren Längsträger 3 und enden etwa auf Höhe der vorderen oberen Befestigungsabschnitte 20 der Halterungen 12. Die Aufnahmen 16 sind deutlich breiter ausgeführt als die Halterungen 12 und bieten somit eine breitbasige Abstützung an der Innenseite der Radhäuser 16.

Zur Versteifung der aus Radhaus 5 und Seitenwandbereich 6 gebildeten Karosseriestrukturen im Bereich der Aufnahmen 16 sind vordere und hintere Stützwinkel 34 vorgesehen, deren kurze Schenkel mit den Oberseiten 36 der Längsträger 3 und deren lange Schenkel mit den Vorderseiten der Aufnahmen 16 verschweißt sind.

An den Rückseiten der Aufnahmen 16 sind Stützkörper 38 vorgesehen, die die Oberseiten 40 der Radhäuser 5 mit den Rückseiten der Aufnahmen 16 verbinden und auf diese Weise eine Versteifung des Verbundes aus Radhaus 5 und Aufnahme 16 erzeugen.

Falls aus Steifigkeitsgründen erforderlich, können die Aufnahmen 16 zusätzlich mit einem Stützwinkel 34 oder mit beiden Stützwinkeln 34 verschraubt werden, über in X-Richtung verlaufende Schrauben (nicht dargestellt).

Wie aus den Fig. 4 bis 6 hervorgeht, sind die Aufnahmen 16 derart profiliert, dass sich in Z-Richtung der Aufnahmen 16 holmartige Abschnitte 42 ergeben, die zumindest abschnittsweise in Verbindung mit dem Radhaus 5 bzw. den Stützkörpern 38 bzw. dem Seitenwandbereich 6 Hohlprofile 44 und 46 bilden. Hierzu weisen die Aufnahmen 16 eine Profilierung in Form von Ausbauchungen 17 auf. Durch die derart aus den beiden "Halbschalen" 16 und 5 bzw. 16 und 38 bzw. 16 und 6 gebildeten geschlossenen Hohlprofile 44 und 46 werden besonders steife Bereiche geschaffen, die eine stabile Anbindung der Halterungen 12 ermöglichen. Auch die Stützkörper 38 weisen Ausbauchungen 39 auf, durch die die holmartigen Abschnitte 42 mit einem für die Biegesteifigkeit maßgeblichen großen Querschnitt, vor allem in Fahrzeugquerrichtung Y, gebildet werden.

Wesentlich ist unter anderem, dass sich die Stützkörper 38 oberhalb der Oberseite 40 des Radhauses 5 erstrecken und dadurch zusammen mit den Aufnahmen 16 eine Anbindung für Halterungen 12 des Überrollschutzsystems 8 bilden, die sich zumindest teilweise oberhalb des Radhauses 5 erstrecken. Diese über das eigentliche Radhaus 5 nach oben hinaus ragende Anbindung weist aufgrund ihrer holmartigen Abschnitte 42 eine hohe Steifigkeit auf und stellt somit eine stabile Struktur für die Verschraubung mit der Halterung 12 dar. Durch die über das Radhaus 5 hinaus ragende Anbindung ergibt sich zudem ein kleiner Hebelarm für die im Fall eines Fahrzeugüberschlags am Überrollschutzsystem 8 angreifenden Kräfte.

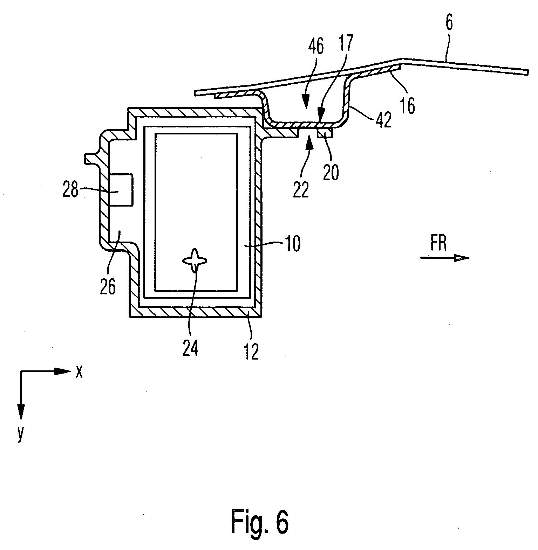

Wie aus Fig. 6 hervorgeht, ist die steife Anbindung für die Aufnahme 12 auch oberhalb des Stützkörpers 38 verlängert, indem die Aufnahme 16 zusammen mit dem Seitenwandbereich 6 das vordere Hohlprofil 46 nach oben hin fortsetzt.

Die Vorderseiten der holmartigen Abschnitte 42 sind als Anlageflächen 48 und 50 für die Befestigungsabschnitte 20 ausgebildet. An der Rückseite der Anlageflächen 48 und 50 sind Schweißmuttern 52 (in Fig. 6 nicht dargestellt) vorgesehen, zur Aufnahme der Schrauben 14. In Fig. 4 ist eine weitere Schweißmutter 54 abgebildet, die der Befestigung beispielsweise eines Gurtaufrollers dient.

Wie aus Fig. 4 hervorgeht, sind an den Außenseiten der Radhäuser 5 Konsolen 56 durch Punktverschweißung P angebracht. Die Konsolen 56 nehmen Komponenten einer nicht dargestellten Hinterachse des Kraftfahrzeugs 2 auf. Ausreichend große Abstände zwischen den Rändern der Konsolen 56 und den Rändern der Aufnahmen 16 ermöglichen eine ungehinderte Punktverschweißung P auch zwischen den Radhäusern 5 und den Aufnahmen 16.

Die Erfindung lässt sich wie folgt zusammenfassen: Ein Kraftfahrzeug 2 mit einem Überrollschutzsystem 8 weist wenigstens einen Überrollstützkörper 10 auf. Für die Anbindung des Überrollstützkörpers 10 an die Karosseriestruktur des Kraftfahrzeugs 2 ist eine breitbasige Aufnahme 16 im Bereich eines hinteren Radhauses 5 und/oder eines Seitenwandbereichs 6 vorgesehen. Die Befestigung erfolgt über Schrauben 14, die in Querrichtung des Kraftfahrzeugs 2 ausgerichtet sind. Hierdurch ergibt sich eine günstige Krafteinleitung im Fall eines Überschlags des Kraftfahrzeugs 2.

## Patentansprüche

1. Kraftfahrzeug mit einem Überrollschutzsystem (8) mit wenigstens einem Überrollstützkörper (10), der in einer Halterung (12) aufgenommen ist, wobei die Halterung (12) über Schrauben (14) unter Zwischenschaltung einer fahrzeugfesten Aufnahme (16) an einer Karosseriestruktur des Kraftfahrzeugs befestigt ist, wobei
die Aufnahme (16) eine Erstreckung in X-Richtung des Kraftfahrzeugs (2) aufweist, die größer ist als die Erstreckung der Halterung (12) in X-Richtung, mit einer Befestigung durch Schrauben (14), deren Längsachse etwa in Y-Richtung des Kraftfahrzeugs (2) verläuft, **dadurch gekennzeichnet, dass** die Aufnahme (16) an der Karosseriestruktur im Bereich eines Radhauses (5) und/oder eines Seitenwandbereichs (6) des Kraftfahrzeugs (2) angeordnet ist und die Aufnahme (16) wenigstens einen etwa in Z-Richtung des Kraftfahrzeugs (2) verlaufenden holmartigen Abschnitt (42) aufweist, wobei der holmartige Abschnitt (42) durch eine Ausbauchung (17) der Aufnahme (16) und/oder durch eine Ausbauchung (39) eines als Schließprofil ausgestalteten Bauteils (5; 38; 6) gebildet wird und, wobei an der Rückseite der Aufnahme (16) wenigstens ein Stützkörper (38) vorgesehen ist, der die Oberseite (40) des Radhauses (5) mit der Rückseite der Aufnahme (16) verbindet.

2. Kraftfahrzeug nach Anspruch 1,
**dadurch gekennzeichnet, dass** die Aufnahme (16) Innengewinde (52) für den Eingriff der Schrauben (14) aufweist.

3. Kraftfahrzeug nach einem der vorangegangenen Ansprüche,
**dadurch gekennzeichnet, dass** wenigstens eine Verstärkung und/oder ein Stützwinkel (34) oder dergleichen (38) vorgesehen ist, um die Aufnahme (16) fahrzeuginnenseitig und/oder fahrzeugaußenseitig zu verstärken und/oder abzustützen.

4. Kraftfahrzeug nach einem der vorangegangenen Ansprüche,
**dadurch gekennzeichnet, dass** an der Außenseite des Radhauses (5), der Aufnahme (16) gegenüberliegend, eine Konsole (56) für wenigstens eine Komponente einer Hinterachse des Kraftfahrzeugs (2) angeordnet ist.

5. Kraftfahrzeug nach einem der vorangegangenen Ansprüche,
**dadurch gekennzeichnet, dass** die Halterung (12) einen geschlossenen Querschnitt aufweist, mit von diesem Querschnitt abstehenden Befestigungsabschnitten (20), die sich in der Einbaulage der Halterung (12) im Kraftfahrzeug (2) etwa in einer XZ-Ebene des Kraftfahrzeugs (2) erstrecken, wobei sowohl an der fahrtrichtungszugewandten als auch an der fahrrichtungsabgewandten Seite des Querschnitts wenigstens ein Befestigungsabschnitt (20) vorgesehen ist.

6. Kraftfahrzeug nach Anspruch 5,
**dadurch gekennzeichnet, dass** die Halterung (12) an ihrer fahrtrichtungszugewandten und an ihrer fahrtrichtungsabgewandten Seite jeweils mit zwei Schrauben (14) an der Aufnahme (16) befestigt ist.

7. Kraftfahrzeug nach einem der vorangegangenen Ansprüche,
**dadurch gekennzeichnet, dass** der Überrollstützkörper (10) in Z-Richtung des Kraftfahrzeugs (2) in der Halterung (12) verlagerbar ist.

8. Kraftfahrzeug nach einem der vorangegangenen Ansprüche,
**dadurch gekennzeichnet, dass** die Halterung (12) einen etwa rechteckförmigen Querschnitt aufweist.

9. Kraftfahrzeug nach einem der vorangegangenen Ansprüche,
**dadurch gekennzeichnet, dass** das Überrollschutzsystem (8) einen rechten und einen linken Überrollstützkörper (10) aufweist, die in einer rechten bzw. in einer linken Halterung (12) aufgenommen sind.

## Claims

1. A motor vehicle with a rollover protection system (8) with at least one rollover support body (10) which is accommodated in a mount (12), the mount (12) being attached to a bodywork structure of the motor vehicle by screws (14) with the interconnection of a receiving device (16) which is fixed to the vehicle,
wherein the receiving device (16) having an extent in the X direction of the motor vehicle (2) which is greater than the extent of the mount (12) in the X direction, with a fastening by screws (14), the longitudinal axis of which extends approximately in the Y direction of the motor vehicle (2), **characterised in that** the receiving device (16) is arranged on the bodywork structure in the region of a wheel housing (5) and/or of a side wall region (6) of the motor vehicle (2) and the receiving device (16) has at least one strut-like portion (42) extending approximately in the Z direction of the motor vehicle (2), wherein the strut-like portion (42) is formed by a bulge (17) of the receiving device (16) and/or by a bulge (39) of a component (5; 38; 6) configured as a closure profile and wherein provided on the back of the receiving device (16) is at least one supporting body (38) which connects the upper side (40) of the wheel housing (5) to the back of the receiving device (16).

2. A motor vehicle according to claim 1,
**characterised in that** the receiving device (16) has an internal thread (52) for the engagement of the screws (14).

3. A motor vehicle according to either of the preceding claims,
**characterised in that** at least one reinforcement and/or an angle bracket (34) or the like (38) is provided to reinforce and/or support the receiving device (16) on the inside or on the outside of the vehicle.

4. A motor vehicle according to any one of the preceding claims,
**characterised in that** arranged on the outside of the wheel housing (5), opposite the receiving device (16) is a console (56) for at least one component of a rear axle of the motor vehicle (2).

5. A motor vehicle according to any one of the preceding claims,
**characterised in that** the mount (12) has a closed cross section with fastening portions (20) which project from this cross section and extend approximately in an XZ plane of the motor vehicle (2) in the installed position of the mount (12) in the motor vehicle (2), at least one fastening portion (20) being provided both on the side of the cross section facing the direction of travel and on the side of the cross section remote from the direction of travel.

6. A motor vehicle according to claim 5,
**characterised in that** the mount (12) is respectively fastened to the receiving device (16) by two screws (14) on its side facing the direction of travel and on its side remote from the direction of travel.

7. A motor vehicle according to any one of the preceding claims,
**characterised in that** the rollover support body (10) can be moved in the mount (12) in the Z direction of the motor vehicle (2).

8. A motor vehicle according to any one of the preceding claims,
**characterised in that** the mount (12) has an approximately rectangular cross section.

9. A motor vehicle according to any one of the preceding claims,
**characterised in that** the rollover protection system (8) has a right and a left rollover support body (10) which are accommodated in a right and in a left mount (12).

## Revendications

1. Véhicule automobile équipé d'un système de protection anti-renversement (8) comprenant au moins un corps de protection anti-renversement (10) qui est logé dans un support (12), ce support (12) étant fixé à une structure de la carrosserie du véhicule par l'intermédiaire de vis (14) avec intégration d'un logement de réception (16) solidaire du véhicule,
dans lequel le logement de réception (16) a une extension dans la direction X du véhicule (2) qui est plus grande que l'extension du support (12) dans la direction X, avec une fixation par des vis (14) dont l'axe longitudinal s'étend essentiellement dans la direction Y du véhicule (2), **caractérisé en ce que**
le logement de réception (16) est situé sur la structure de la carrosserie dans la zone d'un logement de passage de roue (5) et/ou d'une paroi latérale (6) du véhicule (2), et le logement de réception (16) comporte au moins un segment (42) en forme de longeron s'étendant essentiellement dans la direction Z du véhicule (2), le segment en forme de longeron (42) étant formé par un bossage (17) du logement de réception (16) et/ou par un bossage (39) d'une pièce (5, 38, 6) réalisée sous la forme d'un profilé de fermeture, et sur la face arrière du logement de réception (16) étant prévu au moins un corps d'appui (38) qui relie la face supérieure (40) du logement de passage de roue (5) avec la face arrière du logement de réception (16).

2. Véhicule conforme à la revendication 1,
**caractérisé en ce que**
le logement de réception (16) comporte un taraudage (52) pour permettre la mise en prise des vis (14).

3. Véhicule conforme à l'une des revendications précédentes,
**caractérisé en ce qu'**
il est prévu au moins un renfort et/ou une équerre d'appui (34) ou un élément similaire (38) pour permettre de renforcer et/ou de supporter le logement de réception (16) du côté intérieur du véhicule et/ou du côté extérieur du véhicule.

4. Véhicule conforme à l'une des revendications précédentes,
**caractérisé en ce que**,
sur la face externe du logement de passage de roue (5), à l'opposé du logement de réception (16) est montée une poutre en porte à faux (56) pour au moins un constituant d'un essieu arrière du véhicule (2).

5. Véhicule conforme à l'une des revendications précédentes,
**caractérisé en ce que**
le support (12) a une section fermée avec des segments de fixation (20) qui s'écartent de cette section et s'étendent, dans la position de montage du support (12) dans le véhicule (2) essentiellement dans le plan XZ de ce véhicule (2), au moins un segment de fixation (20) étant prévu sur la face de la section tournée dans la direction de déplacement et également sur la face de la section tournée à l'opposé de la direction de déplacement.

6. Véhicule conforme à la revendication 5,
**caractérisé en ce que**
le support (12) est respectivement fixé avec deux vis (14) sur le logement de réception (16) sur sa face tournée dans la direction de déplacement du véhicule et sur sa face tournée à l'opposé de la direction de déplacement du véhicule.

7. Véhicule conforme à l'une des revendications précédentes,
**caractérisé en ce que**
le corps de protection anti-renversement (10) peut être déplacé dans le support (12) dans la direction Z du véhicule (2).

8. Véhicule conforme à l'une des revendications précédentes,
**caractérisé en ce que**
le support (12) a une section essentiellement rectangulaire.

9. Véhicule conforme à l'une des revendications précédentes,
**caractérisé en ce que**
le système de protection anti-renversement (8) comporte un corps de protection anti-renversement (10) gauche et un corps de protection anti-renversement droit qui sont logés dans un support (12) droit ou dans un support gauche.
